(19) Europäisches Patentamt
European Patent Office
Office européen des brevets

(11) EP 2 054 471 B1

(12) **EUROPEAN PATENT SPECIFICATION**

(45) Date of publication and mention of the grant of the patent:
**20.04.2011 Bulletin 2011/16**

(21) Application number: **07765191.7**

(22) Date of filing: **13.07.2007**

(51) Int Cl.:
***C08L 23/10*** *(2006.01)* ***B29C 41/04*** *(2006.01)*

(86) International application number:
**PCT/EP2007/006246**

(87) International publication number:
**WO 2008/009393 (24.01.2008 Gazette 2008/04)**

(54) **USE OF POLYPROPYLENE COMPOSITION**

VERWENDUNG EINER POLYPROPYLEN-ZUSAMMENSETZUNG

UTILISATION D'UNE COMPOSITION DE POLYPROPYLÈNE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.07.2006 EP 06253729**

(43) Date of publication of application:
**06.05.2009 Bulletin 2009/19**

(73) Proprietor: **Borealis Technology OY**
**06101 Porvoo (FI)**

(72) Inventors:
- **OMMUNDSEN, Espen**
  **3970 Langesund (NO)**
- **DOSCHEV, Petar**
  **3920 Porsgrunn (NO)**
- **FINSTAD, Heidi**
  **3925 Porsgrunn (NO)**
- **ERVIK, Ronny**
  **3960 Stahelle (NL)**

(74) Representative: **Campbell, Neil Boyd et al**
**Dehns**
**St Bride's House**
**10 Salisbury Square**
**London**
**EC4Y 8JD (GB)**

(56) References cited:
**EP-A1- 0 636 650** **EP-A1- 0 972 802**
**EP-A1- 1 086 986** **WO-A-2004/062896**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 054 471 B1

## Description

The present invention relates to use of a particular polypropylene composition in rotomoulding, to rotomoulding processes using the composition and to the rotomoulded articles that result. More specifically the invention concerns use of a polymer composition for rotomoulding that comprises at least two polypropylene components, at least one nucleating agent, and an impact modifier.

Rotational moulding (or rotomoulding) is a moulding process in which a particulate polymer, the moulding powder, is filled into a mould which is placed into an oven and rotated so that the polymer melts and coats the inside of the surface of the mould. In order to ensure that the moulded product is defect free it is necessary to form a homogeneous melt. A key step in rotomoulding is therefore sintering of the moulding powder. This is characterised by the occurrence of coalescence of the moulding powder and the production of a porous three dimensional network. Other steps that occur in the mould are densification, bubble removal and surface levelling. After cooling, the moulded product is simply removed from the mould.

A wide variety of articles may be prepared by rotomoulding but the technique is particularly useful for the production of large objects. Examples of articles that may be made by rotomoulding include containers (e.g. boxes, drums, tanks, tubs), boats (e.g. kayaks, canoes), sports and leisure equipment, toys and playground equipment. Use of rotomoulding for the production of large containers for utilisation as heating oil tanks, underground tanks, water tanks and waste containers is particularly common.

Articles made by rotomoulding typically have well defined shapes and it is important that the eventual rotomoulded product has the dimensions that the mould is intended to produce. This is critical, for example, when the rotomoulded article is designed to fit or interact with another article or a specific environment. Rotomoulded products should therefore display minimum warpage.

A variety of polymers have been rotomoulded although homopolymer and copolymers of ethylene are most commonly used. Borecene® is, for example, a commercially available rotomoulding polyethylene which is available from Borealis AS.

Whilst polyethylenes can successfully be used for rotomoulding of a wide variety of articles, there has been a growing interest in rotomoulding of polypropylene. Propylene polymers have excellent thermo-mechanical properties such as high stiffness, hardness and high temperature stability and therefore have the potential to expand the range of products that could be made by rotomoulding. WO03/091295, for example, describes rotomoulding of metallocene-produced syndiotactic polypropylene or an isotactic random copolymer of propylene and WO92/070602 discloses rotomoulding of polypropylene compositions that preferably comprise syndiotactic polypropylene and isotactic polypropylene.

However, rotomoulding of polypropylene is not straightforward. Polypropylene is intrinsically brittle, which is additionally aggravated by the slow crystallisation that occurs during rotomoulding and results in a coarse spherulitic structure. In some types of moulding, nucleating agents can be employed to reduce the spherullite size. However, the finer microstructure of nucleated propylene polymer is generally associated with a higher degree of crystallinity, which in turn results in increased warpage and lower impact strength in rotomoulded articles.

Warpage is a problem that commonly occurs in rotomoulding due to the asymmetrical cooling that occurs. The outer wall of the article is in contact with the mould and is therefore cooled faster than the inner wall, where the heat loss is almost negligible. This creates a solidification front moving from the outer wall towards the inner wall and thus the volume contraction due to crystallisation induces asymmetrical residual stresses and warpage in the final product. The greater the crystallinity of the polymer, the greater the volume contraction due to crystallisation, hence asymmetrical residual stress and warpage are also increased.

In order to improve the impact strength of polypropylene in some types of moulding it is known that an impact modifier may be added. Addition of an impact modifier to a polypropylene composition to be rotomoulded, however, reduces the stiffness and heat deflection temperature of the final article since impact modifiers are inherently soft materials. Moreover impact modifier, especially reactor made impact modifier, can have a negative effect on the sintering properties of polypropylene which is highly undesirable in rotomoulding where it is important that a homogeneous melt is formed.

There still remains a need therefore for a polypropylene composition for rotomoulding which has good sintering properties and produces moulded articles having high impact resistance as well as high stiffness and dimensional stability (e.g. low warpage). To date, no polypropylene-based composition has been rotomoulded that provides articles having an attractive balance of all of these properties. However, it has now surprisingly been found that rotomoulded articles having a desirable combination or balance of these properties may be provided by rotomoulding a polymer composition comprising at least two polypropylene components, a nucleating agent and an impact modifier.

Thus viewed from a first aspect the invention provides use of a polymer composition for rotomoulding, wherein said composition comprises:

(i) at least two propylene polymer components,
(ii) a nucleating agent; and
(iii) an impact modifier

Viewed from a further aspect the invention provides a process for the preparation of an article comprising rotomoulding a polymer composition as hereinbefore defined.

Viewed from a still further aspect the invention provides a rotomoulded article comprising a polymer composition as hereinbefore defined.

Viewed from yet another aspect the invention provides a polymer composition comprising:

(i) at least two propylene, polymer components,
(ii) a polymeric nucleating agent comprising vinyl compound units deriving from a vinyl compound of formula (I):

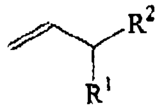

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms or $R^1$ and $R^2$ independently represent a linear or branched $C_{4-30}$ alkane, a $C_{4-20}$ cycloalkane or a $C_{4-20}$ aromatic ring; and
(iii) an impact modifier.

The propylene polymer components present in the compositions used in the present invention preferably comprise at least 50 %, more preferably at least 70 %, still more preferably at least 90 %, e.g. at least 95 or 99 %, by weight of repeat units deriving from propylene. Preferred propylene polymer components are non-heterophasic.

The polypropylene present in the compositions used in the present invention comprise two or more (e.g. three or four) propylene polymer components. Preferably, however, the polypropylene comprises two propylene polymer components. In some embodiments, it is preferred if the polypropylene comprises three propylene polymer components.

The propylene polymer components present in the compositions used in the present invention preferably have different structures in the polymer chains, e.g. the components may have different tacticity and/or different comonomer content. The tacticity of polypropylene can be determined by methods well known in the art, e.g. as described in Die Makromolekulare Chemie, 1965, 85, 34-45 or in the Journal of Applied Polymer Science, 2002, 85, 734-745.

Particularly preferred compositions for use in the invention comprise at least two propylene polymer components having different crystallisation temperatures (Tc). Still more preferably the compositions comprise at least two propylene polymer components having a difference of at least 5 °C in their Tcs, more preferably at least a difference of 10°C in their Tcs, e.g. 5-30 °C difference in their Tcs, still more preferably a 10-25 °C difference in their Tcs. By the phrase "different crystallisation temperatures" is meant herein that the polymers *per se* (i.e. prior to addition of any nucleating agent) have different Tcs.

The propylene polymer components present in the compositions used in the invention preferably have different comonomer contents. In other words, in preferred compositions, the propylene polymer is multimodal (e.g. bimodal or trimodal) in terms of comonomer distribution. As used herein, the term multimodal means that the polymer comprises of two or more components each having a different comonomer and/or comonomer content (wt%). Correspondingly the term bimodal refers to polymers having two different components each having a different comonomer and/or comonomer content (wt%). The term trimodal refers to polymers having three different components each having a different comonomer and/or comonomer content (wt%). In particularly preferred compositions, the polypropylene is bimodal.

The propylene polymer components may all be propylene copolymers or all be propylene homopolymers. Preferably, however, the propylene polymer components comprise a propylene homopolymer and one or more propylene copolymers.

Particularly preferably the polypropylene present in compositions for use in the present invention comprise at least 20 wt%, more preferably at least 30 wt%, still more preferably at least 35 wt% of each propylene component (e.g. homopolymer and copolymer) based on the total weight of propylene polymer components. Still more preferably the polypropylene comprises a higher proportion of propylene homopolymer to propylene copolymer. Typical compositions may comprise propylene homopolymer to copolymer in a ratio of 10:1 to 1:3, e.g. about 2:1 to 1:1.

As used herein the term propylene homopolymer is intended to encompass polymers which consist essentially

of repeat units deriving from propylene. Homopolymers may, for example, comprise at least 90 %, more preferably at least 95 %, still more preferably about 99 %, e.g. 100 % by weight of repeat units deriving from propylene.

As used herein the term propylene copolymer is intended to encompass polymers comprising repeat units from propylene and at least one other monomer. In typical copolymers at least 1 %, preferably at least 5 %, e.g. at least 10 % by weight of repeat units derive from at least one monomer other than propylene.

The propylene homopolymer component that may be present in the compositions of the present invention preferably has an $MFR_2$ in the range 2 to 40 g/10min, more preferably 10 to 25 g/10min, e.g. about 20 g/10min. Preferably the homopolymer is isotactic.

The propylene copolymer component that may be present in the compositions of the invention may be a block copolymer or a random copolymer, but is preferably a random copolymer. By a random copolymer is meant herein that the comonomer is distributed mainly randomly along the polymer chain. Preferred random copolymers are those made using Ziegler Natta catalysts.

The propylene copolymer component comprises an $\alpha$-olefin, e.g. a $C_{2-18}$ $\alpha$-olefin other than propylene. Examples of suitable monomers include ethylene, but-1-ene, pent-1-ene, hex-1-ene and oct-1-ene, especially ethylene. In preferred copolymers the only monomers present are propylene and ethylene. The total amount of $\alpha$-olefin (e.g. ethylene) that is copolymerised with propylene may be 1-20 mol%, preferably 2.5 to 10 mol%, e.g. 3.5 to 7 mol% based on the weight of the copolymer.

When all of the components of polypropylene are copolymers, it is required that the polymers be different. Thus when all of the components are copolymers, it is preferred that the amount of comonomer used in each component will be different, e.g. at least differing by 1 wt%, e.g. at least 2 wt%, preferably at least 3 wt%.

The propylene copolymer component present in the compositions preferably has an $MFR_2$ in the range 5 to 40 g/10min, more preferably 10 to 25 g/10min, e.g. about 23 g/10min.

The polypropylene used in the present invention may be unimodal or multimodal (e.g. bimodal) in molecular weight distribution (MWD). Preferably the MWD is in the range 1.5 to 10, more preferably 2 to 7, still more preferably 3 to 5, e.g. about 2 to 4.

The composition for use in the invention also comprises a nucleating agent. More preferably the composition for use in the invention comprises at least two (e.g. two) different nucleating agents.

Any conventional nucleating agent may be used, e.g. a non-polymeric nucleating agent (e.g. aromatic or aliphatic carboxylic acids, aromatic metal phosphates, sorbitol derivatives and talc) or a polymeric nucleating agent. Suitable non-polymeric nucleating agents include dibenzylidene sorbitol compounds (such as unsubstituted dibenzylidene sorbitol (DBS), p-methyldibenzylidene sorbitol (MDBS), 1,3-O-2, 4-bis (3, 4-dimethylbenzylidene) sorbitol (DMDBS) (available from Milliken under the trade name Millad 3988)), sodium benzoate, talc, metal salts of cyclic phosphoric esters (such as sodium 2, 2'-methylene-bis- (4, 6-di-tert-butylphenyl) phosphate (from Asahi Denka Kogyo K. K., known as NA-11), and cyclic bis-phenol phosphates (such as NA-21, also available from Asahi Denka)), metal salts (such as calcium) of hexahydrophthalic acid, and the unsaturated compound of disodium bicyclo [2.2. 1] heptene dicarboxylate, known as HPN-68 available from Milliken

Commercially available products preferred for use in the practice of the present invention include Millad 3988 (3, 4-dimethyldibenzylidene sorbitol) available from Milliken, NA-11; (sodium 2,2-methylene-bis- (4, 6, di-tert-butylphenyl) phosphate, available from Asahi Denka Kogyo, and NA-21 (aluminum bis [2,2'-methylene-bis- (4, 6-di-tert-butylphenyl) phosphate]),from Asahi Denka Kogyo.

More preferably, however, the composition used in the present invention is nucleated with a polymeric nucleating agent, e.g. a polymer derived from vinyl cycloalkanes and/or vinyl alkanes. Still more preferably the composition is nucleated with a polymer containing vinyl compound units.

A polymeric nucleating agent containing vinyl compound units may be a homopolymer of a vinyl compound or a copolymer of different vinyl compounds Preferably the polymeric nucleating agent is a homopolymer of a vinyl compound.

Preferred polymeric nucleating agents present in the compositions of the present invention comprise vinyl compound units deriving from a vinyl compound of formula (I):

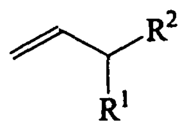

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to

12 carbon atoms) or $R^1$ and $R^2$ independently represent a linear or branched $C_{4-30}$ alkane, a $C_{4-20}$ cycloalkane or a $C_{4-20}$ aromatic ring.

Preferably $R^1$ and $R^2$, together with the carbon atom they are attached to, form an optionally substituted, optionally $C_{1-2}$ bridged, 5 or 6 membered saturated, unsaturated or aromatic ring or $R^1$ and $R^2$ independently represent a $C_{1-4}$ alkyl group.

In further preferred compounds of formula (I), $R^1$ and $R^2$, together with the carbon atom they are attached to, form a 6 membered ring. Still more preferably $R^1$ and $R^2$, together with the carbon atom they are attached to, form a non-aromatic ring (i.e. a vinyl cycloalkane). In particularly preferred compounds the ring formed by $R^1$ and $R^2$, together with the carbon atom they are attached to, is unsubstituted.

Representative examples of vinyl compounds which may be present in the polymeric nucleating agent include vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof. Vinyl cyclohexane is a particularly preferred vinyl compound.

In particularly preferred compositions for use in the present invention a propylene homopolymer is nucleated with a polymeric nucleating agent as hereinbefore defined. Still more preferably the compositions for use in the invention further comprises a propylene copolymer nucleated with a polymeric nucleating agent or a non-polymeric nucleating agent (e.g. a non-polymeric nucleating agent).

Non-polymeric nucleating agents may be added to the compositions for use in the invention in an amount from about 0.01 percent to about 10 percent by weight based on the weight of the total composition. In most applications, however, less than about 3.0 percent by weight (based on weight of total composition) are required. In some applications, such compounds may be added in amounts from about 0.05 to about 0.3 % (based on weight of total composition) to provide beneficial characteristics.

Polymeric nucleating agents may be present in the compositions used in the present invention in amounts of greater than 0.1 ppm, e.g. from about 0.1 to 1000 ppm based on the weight of the total composition. More preferably polymeric nucleating agents may be added to the compositions in amounts (based on total weight of the composition) of greater than 0.5 ppm, still more preferably in amounts of 1 to 500 ppm, especially preferably 2 to 100 ppm, e.g. 3 to 50 ppm.

One effect of adding a nucleating agent to the compositions used in the invention may be to increase the Tc of a propylene polymer component. In compositions wherein one propylene component is nucleated, it is preferred that the Tc of a nucleated propylene polymer component and the Tc of a non-nucleated polymer component are different (e.g. by at least 3°C, more preferably at least 5 °C, still more preferably at least 10 °C). Preferably the Tcs of the components are different by 5-30 °C, more preferably 10-25 °C. In compositions wherein at least two propylene polymer components are nucleated, it is preferred that the Tcs of the nucleated components are different. Still more preferably the nucleated propylene polymer components have Tcs that differ by at least 3 °C, more preferably at least 5 °C, still more preferably at least 10 °C, e.g. 5-30 °C or 10-25 °C.

The polypropylene present in the compositions used in the invention may be prepared by simple blending (e.g. melt blending, preferably extrusion blending), by two or more stage polymerisation or by the use of two or more different polymerisation catalysts in a one stage polymerisation. Blending may, for example, be carried out in a conventional blending apparatus (e.g. an extruder). Propylene homopolymer and copolymers (e.g. random copolymers) that may be used in this invention are commercially available from various suppliers, e.g. Borealis A/S.

Alternatively the polypropylene may be produced in a multi-stage polymerisation using the same catalyst, e.g. a metallocene catalyst or preferably a Ziegler-Natta catalyst. In a preferred multi-stage polymerisation a bulk polymerisation, e.g. in a loop reactor, is followed by a gas phase polymerisation in a gas phase reactor. A preferred bulk polymerisation is a slurry polymerisation. Conventional cocatalysts, supports/carriers, electron donors can be used.

A loop reactor gas phase reactor system is described in EP-A-0887379 and WO92/12182, and is marketed by Borealis A/S, Denmark as a BORSTAR reactor system. The propylene polymer used in the invention is thus preferably formed in a two stage process comprising a first bulk loop polymerisation followed by gas phase polymerisation in the presence of a Ziegler-Natta catalyst.

With respect to the above-mentioned preferred bulk (e.g. slurry)-gas phase process, the following general information can be provided with respect to the process conditions.

A temperature of from 40°C to 110°C, preferably between 60°C and 100°C, in particular between 80°C and 90°C is preferably used in the bulk phase. The pressure in the bulk phase is preferably in the range of from 20 to 80 bar, preferably 30 to 60 bar, with the option of adding hydrogen in order to control the molecular weight being available. The reaction product of the bulk polymerization, which preferably is carried out in a loop reactor, is then transferred to a subsequent gas phase reactor, wherein the temperature preferably is within the range of from 50°C to 130°C, more preferably 80°C to 100°C. The pressure in the gas phase reactor is preferably in the range of from 5 to 50 bar, preferably 15 to 35 bar, again with the option of adding hydrogen in order to control the molecular weight available.

The residence time can vary in the reactor zones identified above. The residence time in the bulk reaction, for example the loop reactor, may be in the range of from 0.5 to 5 hours, for example 0.5 to 2 hours. The residence time in

the gas phase reactor may be from 1 to 8 hours.

The properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of the polymer.

Preferably, the first propylene polymer component of the polymer used in the invention is produced in a continuously operating loop reactor where propylene (and comonomer when required) is polymerised in the presence of a polymerisation catalyst (e.g. a Ziegler Natta catalyst) and a chain transfer agent such as hydrogen. The liquid phase may be the monomer itself or in addition it may contain a diluent. The diluent is typically an inert aliphatic hydrocarbon, preferably isobutane or propane.

The second propylene polymer component can then be formed in a gas phase reactor using the same catalyst.

Prepolymerisation can be employed as is well known in the art.

Ziegler-Natta catalysts are preferred. The nature of the Ziegler-Natta catalyst is described in numerous prior publications, e.g. US 5234879.

Nucleation of the propylene components for use in the invention may be carried out by conventional techniques, e.g. by blending. More preferably, however, when the nucleating agent is a polymer containing vinyl compound units, nucleated propylene polymers are made by modifying a polymerisation catalyst with vinyl compounds as hereinbefore described and using the modified catalyst for the polymerisation of propylene, optionally in the presence of comonomers. The catalyst systems and reaction conditions suitable for application in this latter method are described in WO99/24501. For instance, examples 1 and 2 described therein disclose a specific procedure which may be used to prepare a propylene polymer comprising a polymeric nucleating agent for use in the compositions of the present invention.

The compositions of the present invention also comprise an impact modifier. By "impact modifier" is meant any polymer that functions to increase the impact resistance of the polymer compositions. Any conventional impact modifier may be used (e.g. any elastomer or plastomer). For example the impact modifier may be one or more elastomeric copolymer of propylene and one or more olefin comonomer (e.g. EPR), a LLDPE, a LDPE, or a mixture thereof.

The elastomeric copolymer of propylene and one or more olefin comonomer preferably comprises 20 to 90 %wt of olefin comonomer (e.g. ethylene or $C_{4-8}$ $\alpha$-olefin). Suitable amounts of ethylene or $C_{4-8}$ $\alpha$-olefin in the elastomeric propylene copolymer are 25 to 75 %wt, more preferably 30 to 60 %wt. Preferably the comonomer is ethylene.

Particularly preferably the elastomeric copolymer of propylene and one or more olefin comonomer is ethylene-propylene-diene (EPDM) or ethylene propylene rubber (EPR) (e.g. EPR). Suitable EPRs for use in the invention are commercially available. For example Dutral CO 058 from Polimeri Europa may be used as the impact modifier.

LLDPE that may be used in the compositions of the invention as an impact modifier is preferably a copolymer of ethylene and one or more olefin comonomers, (e.g. $C_{3-8}$ $\alpha$-olefin). Suitable amounts of $C_{3-8}$ $\alpha$-olefin in the copolymer are 3 to 50 %mol, more preferably 5 to 30 %mol, e.g. 7 to 20 %mol. Preferably the comonomer is propylene, butene or octene, e.g: octene.

Preferably the LLDPE has a $MFR_2$ of 0.5 to 30 g/10min, more preferably 3-15 g/10min, still more preferably 4 to 12 g/10min. Still more preferably the LLDPE has a density of 820-910 kg/m$^3$, more preferably 850-900 kg/m$^3$, e.g. about 860-890 kg/m$^3$. LLDPE for use an impact modifier is commercially available from ExxonMobil under the tradenames Exact 5361 and Vistamaxx VM6100 and from DexPlastomers under the tradename Exact 8210.

The LDPE that may be present in the compositions of the invention as the impact modifier preferably has a $MFR_2$ of 0.5 to 30 g/10min, more preferably 1-15 g/10min. Still more preferably the LDPE has a density of 900-990 kg/m$^3$, more preferably 905-930 kg/m$^3$, e.g. about 910-925 kg/m$^3$, LDPE for use as an impact modifier is commercially available from Borealis A/S under the tradename CA9150.

Particularly preferred compositions of the invention comprise an EPR and/or a LLDPE as hereinbefore described as the impact modifier. Particularly preferred compositions comprise a LLDPE.

The polymer compositions of the present invention may also contain any conventional additives (e.g. process, heat and light stabilisers, colorants, antistatic agents, antioxidants, carbon black, pigment, flame retardants, foaming agents, blowing agents). A filler may also be present (e.g. talc).

The polymer compositions may be prepared by any conventional methods known in the art, e.g. by mixing each of the components, hereinbefore described. The composition may also be made by making the polypropylene components in a BORSTAR process as hereinbefore described and compounding the resulting polymer with an impact modifier. Preferably the impact modifier is introduced into the compositions of the invention by carrying out one or more further polymerisation steps in the presence of the propylene polymer components. If this latter process is used a heterophasic polypropylene is produced. Preferred compositions comprise heterophasic polypropylene. In this case, a further external impact modifier may optionally be added after polymerisation is complete.

Heterophasic polypropylene may be prepared by any conventional procedure. For instance, the polypropylene produced in accordance with the processes discussed above may be transferred into a further reactor, preferably a gas phase reactor in order to polymerize an impact modifier (e.g. EPR). One or more (e.g. two) further polymerisation steps

may be carried out.

This polymerization stage is preferably carried out as a gas-phase polymerisation in one or more gas-phase reactors. It is particularly preferred that this polymerization stage is carried out in one gas-phase reactor to which the polypropylene is fed together with comonomers (e.g. ethylene and propene), and hydrogen as needed.

As mentioned earlier, the comonomer is at least one olefin selected from the group consisting of ethylene and $C_{4-10}$ $\alpha$-olefins, such as ethylene, butene, pentene, hexene and octene (e.g. ethylene).

The conditions for the polymerization are within the limits of conventional production conditions, e.g. for EPR as disclosed in Encyclopedia of Polymer Science and Engineering, Second Edition, Vol. 6, pp. 545-558. The temperature for the polymerization of EPR is preferably 40 to 90°C, and more preferably 60 to 70°C. The pressure is preferably 500 to 3000 kPa, preferably 1000 to 2000 kPa. The process, e.g. comonomer content and MFR, may be controlled in a known manner.

The resulting polymer compositions preferably comprise, based on the total weight of composition, 95 to 60 wt% polypropylene, more preferably 90 to 70 wt% polypropylene, e.g. about 80 wt% (wherein the weight of the polypropylene includes the weight of nucleating agent). Correspondingly the compositions preferably comprise 5 to 40 wt% impact modifier, more preferably 10 to 30 wt% impact modifier, e.g. about 20 wt%. Particularly preferred compositions according to the present invention comprise 20 to 80 wt% (e.g. 30 to 60 wt%) of a first propylene polymer component (e.g. a homopolymer as hereinbefore defined), 10 to 60'wt% (e.g. 20 to 40 wt%) of a second propylene polymer component (e.g. a propylene copolymer as hereinbefore defined) and 5 to 40 wt% (e.g. 10 to 30 wt%) impact modifier.

The $MFR_2$ of the polymer compositions of the invention is preferably 7 to 40, more preferably 10 to 30 g/10 min, still more preferably 15 to 25 g/10min, e.g. about 23 g/10min. The molecular weight distribution of preferred compositions is in the range 1.5 to 10, more preferably 2 to 7, still more preferably 3 to 5, e.g. about 2 to 4.

To ensure that the composition is in a suitable form for rotomoulding the products of any polymerisation reaction may be converted to powder form or pelletised. Pellets are preferred. The average particle size of the powder/pellets is preferably less than 1000 $\mu$m, preferably 100 to 650 $\mu$m, e.g. about 500-600 $\mu$m. Suitably sized powder/pellets may, for example, be prepared by grinding.

Alternatively micropellets may be produced using the technique described in WO00/35646 wherein a polymer composition is extruded in melt form through a die and pelletised to give particles having a particular size distribution. The particles are then dried to very low levels of moisture to improve rotomouldability.

The polymer compositions of the present invention have a number of advantageous properties that render them especially suitable for use in the manufacture of rotomoulded articles. Rotomoulding may be carried out according to standard conditions. The polymer powder is placed in a mould which is then transferred to an oven and rotated, preferably about two axes to distribute the polymer powder over the hot surfaces of the mould. The heating cycle is continued until all of the powder has melted and formed a continuous layer within the mould. The mould is then removed from the oven and cooled until the polymer has solidified. The moulded article is then removed.

The length of time for which the mould must be heated depends on the nature of the article being moulded, the amount and nature of polymer composition present and the temperature of the oven. Typical rotomoulding oven temperatures are 230 to 400 °C, more Particularly 260 to 320 °C (e.g. about 290 °C). Heating time is chosen such that the peak internal air temperature (PIAT) in the mould is 160 to 300 °C, more preferably 170 to 250 °C (e.g. about 240 °C). This temperature can be measured using a Rotolog® or similar equipment to monitor the temperature or it may be chosen based on previous experience. The oven may optionally be pressurised to reduce the amount of time in the mould. Typical pressures that may be used are less than 4 bar, more preferably less than 1 bar (e.g. about 0.5 bar).

Cooling may be carried out under a stream of air, water spray or mist or simply in ambient air at room temperature. A combination of these methods may also be employed. Preferably cooling is achieved using a combination of blown air followed by ambient air or just blown air. Cooling times are normally of similar magnitude to heating times or slightly longer. Slow cooling further reduces the amount of warpage in an article, but the compositions of this invention are much less prone to warpage than the polypropylene compositions in the prior art. The moulded article may be removed from the mould at any convenient time after solidification has occurred.

The skilled man is able to manipulate the temperature, time and rotation speed/ratio within a rotomoulding apparatus to ensure that well-formed moulded articles are produced. Particularly preferred rotomoulding conditions are: oven temperature 230-350 °C (e.g. 290 °C), PIAT 170 to 250 °C (e.g. 240 °C), oven time 5 mins to 120 mins (e.g. about 15 mins), rotation ratio 0.1-20 rpm/0.1-20 rpm (e.g. 9 rpm/1.4 rpm)

An advantage of the polymer compositions of the present invention is that rotomoulded articles produced therefrom have reasonably high impact resistance and stiffness but also low warpage. The polymers are also facile to rotomould as they sinter easily.

Compositions for use in the invention preferably have a tensile modulus of at least 950 MPa, more preferably at least 1000 MPa, still more preferably at least 1100 MPa, e.g. at least 1200 MPa (wherein the tensile modulus is determined on samples machinated from rotomoulded samples as described in the examples).

Further preferred compositions have a warpage that is less than 25 mm, more preferably less than 15 mm, still

more preferably less than 10 mm, e.g. less than 6 mm (wherein warpage is determined as described in the examples).

Still more preferably compositions for use in the invention have a tensile modulus of at least 950 MPa, more preferably at least 1000 MPa, still more preferably at least 1100 MPa, e.g. at least 1200 MPa and a warpage of less than 25 mm, more preferably less than 15 mm, still more preferably less than 10 mm, e.g. less than 6 mm. Particularly preferred compositions for use in the present invention have a warpage ≤ -33 + (0.039 x Tensile Modulus), still more preferred compositions have a warpage ≤ -34 + (0.039 x Tensile Modulus), yet further preferred compositions have a warpage ≤ -35 + (0.039 x Tensile Modulus), e.g. compositions have a warpage ≤ -36 + (0.039 x Tensile Modulus).

Compositions used in the present invention preferably have at least two, more preferably three, still more preferably all, of the following properties (i)-(iv) wherein the tensile modulus and charpy measurements refer to that measured on samples machinated from rotomoulded samples as described in the examples hereinafter and warpage is measured as described in the examples:

i) Warpage (mm): less than 5.5, preferably less than 3.0
ii) Tensile Modulus (MPa): at least 1000, preferably at least 1020 MPa
iii) Charpy (23°C) $KJ/m^3$: at least 10, preferably at least 12
iv) Charpy (0°C) $KJ/m^3$: at least 5, preferably at least 6

Representative examples of articles that may be rotomoulded using the compositions of the present invention include containers (e.g. boxes, drums, tanks), tubs (especially tubs that are autoclaved or steam sterilised for use in the food or pharmaceutical industry), automotive parts (e.g. fuel tanks, air ducts, bumpers, intake manifolds), boats (e.g. kayaks, canoes), sports and leisure equipment, toys and playground equipment.

The invention will now be further illustrated by the following non-limiting examples.

<u>Analytical Tests</u>

Values quoted in the description and examples are measured according to the following tests:
i) $MFR_2$ was measured in accordance with ISO 1133 at 230°C with a 2.16 kg load for polypropylene and at 190 °C with a 2.16 kg load for polyethylene.
ii) Density was measured according to ISO 1183
iii) The weight average molecular weight, Mw and the molecular weight distribution (MWD = Mw/Mn wherein Mn is the number average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howinks constant K: $9.54x10^{-5}$ and a: 0.725 for PS, and K: $3.92x10^{-4}$ and a: 0.725 for PE).
iv) Comonomer content (weight percent) was determined in a known manner based on FTIR, calibrated with $C^{13}NMR$
v) Melting temperature ($T_m$), crystallization temperature ($T_c$), degree of crystallinity ($X_c$) and enthalpy change ($\Delta H$) were measure according to ISO11357. The samples were cut from compression molded, 0.2 mm films. The measurements were performed at the following conditions:

| Stage | Temperature Program | Heating/Cooling Rate | Time |
|---|---|---|---|
| | | *°C/min* | *min* |
| $1^{st}$ heating | 20-225 °C | 10 | |
| Isothermal | 225°C | | 5 |
| Cooling | 225-20°C | -10 | |
| Isothermal | 20 | | 1 |
| $2^{nd}$ heating | 20-225°C | 10 | |

The $T_m$, $X_c$ and $\Delta H$ were determined from the second heating. The degree of crystallinity (Xc) was calculated using enthalpy of fusion of 100 % PP equal to 209 J/g.
vi) Measured xylene solubles (XS) and Amorphous phase (AM)

The xylene soluble fraction (XS) as defined and described in the present invention is determined as follows: 2.0 g of the polymer are dissolved in 250 mm p-xylene at 135°C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90°C until constant weight is reached. The xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter).

The solution from the second 100 ml flask was treated with 200 ml of acetone under vigorous stirring. The precipitate was filtered and dried in a vacuum oven at 90 °C. This solution can be employed in order to determine the amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and $v_1$ defines the volume of the analysed sample (milliliter). The disperse phase of the rubber corresponds to the amount of amorphous phase in the heterophasic polymer.

(vi) Intrinsic viscosity (IV)

The intrinsic viscosity (IV) value increases with the molecular weight of a polymer. The IV values e.g. of the amorphous phase were measured according to ISO 1628.

**TOUGHNESS PROPERTIES**

viii) Instrumental falling weight (IFW) was measured according to ISO6603-2 at 0 °C unless otherwise specified on samples taken from rotational moulded boxes. The samples had a diameter of 60 mm and a thickness of about 3.3-3.8 mm. All data are given relative to the thickness (Maximum force - N/thicknes and Puncture energy - J/thickness)

ix) Charpy Impact Strength was determined according to ISO 179:2000 on V-notched samples at 23 °C (Charpy impact strength (23 °C)) and at -20 °C (Charpy impact strength (-20 °C)). The samples were taken from rotational moulded boxes. The samples had a thickness of about 3.3-3.8 mm.

**STIFFNESS PROPERTIES**

x) Stiffness was measured on specimen (according to ISO3167 - Multipurpose test specimen, type B (milled)) according to ISO 527-2:1993. The thickness of the compression moulded samples was 4 mm and the thickness of the rotation moulded samples was 3.3-3.8 mm. The modulus was measured at a speed of 1 mm/min and stress at yield was measured at 50 mm/min.

**THERMAL RESISTANCE**

xi) Heat Deflection Temperature was measured according to ISO-75-2: Method B on compression moulded plaques having a thickness of 4 mm.

**WARPAGE**

xii) Warpage was determined on compression moulded articles according to the method described by Glomsaker, T et al. in Polymer Engineering and Science, 945-952 (2005) except that the melting temperature used was 225 °C rather than 200 °C.

**SINTERING PROPERTIES**

xiii) The sintering behavior was determined according to the experimental procedure described by Bellehumeur C.T. et al. in Polymer Engineering and Science 36, 2198-2207 (1996). Powder particles with diameter within the range of 300-425 μm were used in the experiments and the experiments were performed at 175 °C. In order to ensure reproducibility of the results, at least two pairs of particles were tested for a certain material composition.

The sintering behaviour was deduced from the development of a/b ratio (neck radius) as a function of time. The a/b ratio was determined using AnalySIS Pro 3.1 supplied by Soft Imaging System GmbH as shown in the diagram

below where X is the centre of gravity; a is the shortest distance from the centre of gravity to the outer particle border; b is the longest distance from the centre of gravity to the outer particle border.

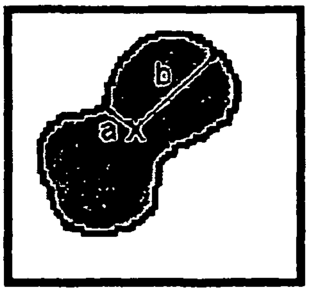


At a certain time, a higher a/b ratio means better sintering. The maximum a/b ratio is 1.

EXAMPLE 1 - Blending

Preparation of propylene polymer components

Polymers having the properties set out in table 1 below were prepared according to methods described in the prior art indicated or purchased from the supplier indicated.

Table 1

| Polymer | Nature | $MFR_2$ g/ 10min | Nucleated | $C_2$ content Wt% | Tc °C | Tm °C | Visbroken * | Tensile Modulus MPa | Warpage mm |
|---|---|---|---|---|---|---|---|---|---|
| 1[a] | Homo-polymer | 20 | Yes, with a polymer of VCH | - | 129 | 167 | No | 2200 | 47 |
| 2[b] | Homo-polymer | 20 | No | - | 110 | 161 | Yes | 1500 | 31.9 |
| 3[c] | Copolymer (random) | 13 | Millad 3885 | 4.6 | 116 | 146 | Yes | 850 | 1 |
| 4[d] | Copolymer (random) | 23 | Millad 3885 | 5.7 | 110 | 140 | Yes | 640 | 1 |
| 5[e] | Copolymer (random) | 20 | Millad 3885 | 3.2 | 120 | 150 | No | 1150 | 17.8 |
| 6[f] | Copolymer (random) | 12 | Millad 3885 | 5.7 | 110 | 140 | Yes | 680 | |
| 7[g] | Copolymer (random) | 23 | No | 5.7 | | | Yes | | 0.9 |

(continued)

| Polymer | Nature | $MFR_2$ g/ 10min | Nucleated | $C_2$ content Wt% | Tc °C | Tm °C | Visbroken * | Tensile Modulus MPa | Warpage mm |
|---|---|---|---|---|---|---|---|---|---|
| 8[h] | Copolymer (hetero-phasic) | 13 | No | | 162 | 114 | No | 1250 | 16.1 |
| a - prepared according to Example 1 of WO00/68315<br>b- Commercially available as HF136MO from Borealis A/S<br>c- Commercially available as RE435MO from Borealis A/S<br>d- Prepared according to EP0887379 with a catalyst as described in EP-A-491566<br>e- Commercially available as RF365MO from Borealis A/S<br>f- Prepared according to EP0887379 with a catalyst as described in EP-A-491566<br>g- Prepared according to EP0887379 with a catalyst as described in EP-A-491566<br>h - Commercially available as BE170MO from Borealis A/S<br>* - Visbroken according to conventional techniques with peroxide Trigonox 101 from Akzo Nobel | | | | | | | | | |

Preparation of polymer compositions

Polymer compositions comprising the polymers set out in table 2 below were prepared by firstly dry-blending, pellet with pellet, in a blender and subsequent melt blending in a twin screw extruder. The polymers were then cryogenically ground with liquid $N_2$ assistance to form a powder that is 500-600 $\mu$m in average particle size.

Table 2

| Composition | Components# (% are given by weight) | | |
|---|---|---|---|
| C1 | Polymer 1 (40 %) | Polymer 3 (40.0 %) | Exact 8210 (20.0 %) |
| C2 | Polymer 1 (45 %) | Polymer 4 (35.0 %) | Exact 8210 (20.0 %) |
| C3 | Polymer 1 (45 %) | Polymer 4 (35.0 %) | Exact 5361 (20.0 %) |
| C4 | Polymer 1 (50.0 %) | Polymer 4 (35.0 %) | Vistamaxx VM6100 (15.0 %) |
| C5 | Polymer 1 (50.0 %) | Polymer 6 (30.0 %) | Exact 8210 (20.0 %) |
| C6 | Polymer 1 (55.0 %) | Polymer 3 (30.0 %) | Vistamaxx VM6100 (15.0 %) |
| C7* | Polymer 1 (40.0 %) | Polymer 3 (60.0 %) | - |
| C8* | Polymer 5 (80.0 %) | - | Exact 8210 (20.0 %) |
| C9* | Polymer 2 (45.0 %) | Polymer 7 (35.0 %) | Exact 8210 (20.0 %) |
| C10* | Polymer 8 | - | - |

(continued)

| Composition | Components# (% are given by weight) | | |
|---|---|---|---|
| | (100 %) | | |

# All compositions were compounded together with 500 ppm Irgafos 168 and 800 ppm Irganox 1010
* comparative: C7 - Impact Modifier is absent, C8 - A second propylene polymer component is absent, C9 - Nucleating agent is absent, C10 - Impact modifer, nucleating agent and second propylene polymer absent

Preparation of rotomoulded box

Compositions 1-9 were rotomoulded to form boxes having a wall thickness of 3.5 mm using a Ferry Rotospeed E60 rotomoulding machine (shuttle with biaxial rotation) according to the following conditions: Oven temperature 290 °C, PIAT 240 °C, oven time 14 min, rotation ratio 9/1.4, with no reversing of the rotation, cooling time 15 mins with forced air

The properties of the resulting boxes are summarised in table 3 below.

Table 3

| | MFR$_2$ | SINTERING | | TOUGHNESS | | | STIFFNESS | | | | THERMAL RESISTANCE | THERMAL BEHAVIOR | | | FORM STABILITY |
|---|---|---|---|---|---|---|---|---|---|---|---|---|---|---|---|
| | | | | Samples machinated from RM box | | | Samples machinated from CM plaques | | Samples machinated from RM box | | Samples machinated from CM plaques | | | | |
| | | a/b ratio at 300 sec. | microscopy observation of boxes | IFW | Charpy | | Tensile Modulus | Stress at yield | Tensile Modulus | Stress at yield | HDT | Tc | Tm | Xc | Warpage |
| | | | | 0°C | 23°C | 0°C | 23°C | | 23°C | | - | | | | - |
| | g/10 min | | | J/mm | KJ/m$^2$ | KJ/m$^2$ | MPa | MPa | MPa | MPa | °C | °C | °C | % | mm |
| C1 | 15.8 | | good | 3.1 | 13.2 | 6.2 | 1060 | 22.5 | 1050 | 23.8 | 103.2 | 126 | 161 | 38 | 2.8 |
| C2 | 22.9 | 0.52 | good | 10 | 13.3 | 6.3 | 1030 | 21.1 | 1050 | 22.3 | 100.6 | 128 | 163 | 38 | 1.7 |
| C3 | | | | | 17.8 | 6.2 | | | 998 | 19.9 | | | | | 2.3 |
| C4 | | | | | 13.4 | 1.8 | | | 1098 | 21.8 | | | | | 1 |
| C5 | | | | | 17.7 | 6.2 | | | 1052 | 21.8 | 105.6 | | | | 2.3 |
| C6 | | | | | 12.8 | 5.2 | | | 1252 | 21.4 | 122.3 | | | | 5.2 |
| C7* | 20.9 | 0.47 | good | 1.5 | 5.3 | 2 | 1270 | 27.9 | 1280 | 27.1 | 105 | 126 | 160 | 44 | 1 |
| C8* | 20.7 | 0.4 | poor | 0.6 | 13.6 | 6.2 | 835 | 21.2 | 820 | 21.3 | 85.3 | 121 | 150 | 35 | 2.7 |
| C9* | | | | | 9 | 1.9 | | | 883 | 21.9 | | 115 | 160 | 30 | 4.6 |

(continued)

| | MFR$_2$ | SINTERING | | TOUGHNESS | | | STIFFNESS | | | | THERMAL RESISTANCE | THERMAL BEHAVIOR | | | FORM STABILITY |
|---|---|---|---|---|---|---|---|---|---|---|---|---|---|---|---|
| | | | | Samples machinated from RM box | | | Samples machinated from CM plaques | | Samples machinated from RM box | | Samples machinated from CM plaques | | | | |
| | | a/b ratio at 300 sec. | microscopy observation of boxes | IFW | Charpy | | Tensile Modulus | Stress at yield | Tensile Modulus | Stress at yield | HDT | Tc | Tm | Xc | Warpage |
| | | | | 0°C | 23°C | 0°C | 23°C | | 23°C | | - | | | | - |
| | g/10 min | | | J/mm | KJ/m$^2$ | KJ/m$^2$ | MPa | MPa | MPa | MPa | °C | °C | °C | % | mm |
| C10* | | | | | 7.3 | 3.6 | | | 1260 | 24.1 | 85 | 114 | 162 | 52 | 16.1 |

* comparative
RM - Rotomoulded; CM - Compression moulded

EXAMPLE 2 - Use of reactor made bimodal propylene polymer

Preparation of bimodal propylene polymer

Two polymers having the properties set out in table 4 below were prepared according to the Borstar method described herein.

Table 4

| | | 11 | 12 |
|---|---|---|---|
| Properties | Unit | | |
| Propylene Component 1 | | | |
| Amount | wt.% | 42 | 47 |
| Comonomer content | wt.% | 0 | 0 |
| Comonomer type | | - | - |
| MFR | g/10 min | 20.9 | 21 |
| Propylene Component 2 | | | |
| Amount | wt.% | 58 | 53 |
| Comonomer type | | $C_2$ | $C_2$ |
| Final | | | |
| MFR | g/10 min | 19.1 | 20.0 |
| Comonomer content | wt.% | 3.7 | 2.6 |
| Comonomer type | | $C_2$ | $C_2$ |
| Millad M3988 | ppm | 1000 | 1700 |
| $T_m$ | °C | 165 | 163 |
| $T_c$ | °C | 115 | 131 |
| ΔH | $Jg^{-1}$ | 72 | 83 |
| Charpy,23°C | $kJ/m^2$ | 7.2 | 6.4 |
| Tensile Modulus | MPa | 780 | 1210 |

Polymers 11 and 12 were prepared in accordance with the examples in EP887379 except where noted using a multistage polymerisation process comprising a prepolymerisation, a polymerisation in a loop reactor (slurry polymerisation), followed by a final polymerisation in a gas phase reactor. Comonomer was additionally supplied to the loop reactor and/or gas phase reactor during polymerisation. The ZN catalyst used is described in US5,234,879 at a temperature of 135°C. The catalyst was contacted with a cocatalyst (triethylaluminium, TEAL), and an external donor (donor D, dicyclopentyl dimethoxysilane) with the Al/Ti ratio of 200 and an Al/D ratio of 10, to yield the catalyst system. The catalyst system and propylene were fed into the prepolymerisation reactor which was operated at 30 °C. The prepolymerised catalyst was used in the subsequent polymerisation reactors. Propylene, hydrogen, prepolymerised catalyst and ethylene were fed into the loop reactor which was operated as a bulk reactor at the temperature of 85 °C and a pressure of 55 bar. Then, the polymer slurry stream was fed from the loop reactor into the gas phase reactor which was operated at 85 °C and 33 bar. Propylene, ethylene and hydrogen were fed into the gas phase reactor to control the desired properties of the final polymer

Preparation of polymer compositions

Polymer compositions comprising the polymers set out in Table 5 below were prepared by firstly dry-blending, pellet with pellet, in a blender and subsequent melt blending in a twin screw extruder. The polymers were then cryogenically ground with liquid $N_2$ assistance to form a powder that is 500-600 μm in average particle size.

The resulting compositions were rotomoulded to form boxes as described in Example 1. The properties of the resulting boxes (as determined on specimens milled from moulded boxes) are also summarised in the table below.

Table 5

| | | C11 | C12 | C13 |
|---|---|---|---|---|
| Polymer 1 | %wt | | 40 | 25 |
| Polymer 2 | %wt | 40 | | |
| Polymer 4 | %wt | | | |
| Polymer 11 | %wt | 40 | 40 | |
| Polymer 12 | %wt | | | 55 |
| Exact 8210 | %wt | 20 | 20 | 20 |
| Millad 3988 | ppm | 1000 | | |
| $T_m$ | °C | 163 | 164.4 | 163.5 |
| $T_c$ | °C | 127.4 | 128.8 | 127.8 |
| Charpy, 23 | $kJ/m^2$ | 16.2 | 10 | 8.1 |
| Charpy, 0 | $kJ/m^2$ | 7.9 | 5.4 | 3.6 |
| Tensile Modulus | MPa | 933 | 1026 | 1066 |
| Warpage | mm | 1.9 | 1.4 | 2.5 |

EXAMPLE 3 - Use of reactor made bimodal propylene polymer/impact modifier

Three polymers having the properties set out in table 6 below were prepared according to the Borstar method described herein.

The polymers were prepared in accordance with the examples in EP887379 except where noted using a multistage polymerisation process comprising a prepolymerisation, a polymerisation in a loop reactor (slurry polymerisation), followed by a final polymerisation in a gas phase reactor. Comonomer was additionally supplied to the loop reactor and/or gas phase reactor during polymerisation. The ZN catalyst used is described in US5,234,879 at a temperature of 135°C. The catalyst was contacted with a cocatalyst (triethylaluminium, TEAL), and an external donor (donor D, dicyclopentyl dimethoxysilane) with the Al/Ti ratio of 200 for ex.13 and 360 for ex. 14 and 15 an Al/D ratio of 10, to yield the catalyst system.

The catalyst system and propylene were fed into the prepolymerisation reactor which was operated at 30°C. The prepolymerised catalyst was used in the subsequent polymerisation reactors. Propylene, hydrogen, prepolymerised catalyst and ethylene were fed into the loop reactor which was operated as a bulk reactor at the temperature of 85 °C and a pressure of 55 bar. Then, the polymer slurry stream was fed from the loop reactor into the first gas phase reactor which was operated at 85°C and 33 bar. The polymer from the first gas phase reactor is transferred to the second gas phase reactor operated at 80 and 85 °C and a pressure of 30 bar and 31 bar, respectively.

For Ex. 14 the resulting polymer was fed into a further gas phase reactor operated at 85°C and 31 bar. Propylene, ethylene and hydrogen were fed into the gas phase reactors to control the desired properties of the polymer.

For Ex. 15 85 %wt of the polymer made in Ex. 14 was blended with 15 %wt mLLDPE having a $MFR_2$ 12 g/10 min measured at 230°C and a density 917 $kg/m^3$. The mLLDPE was prepared in accordance with the examples in WO2005002744.

Table 6

| | | 13 | 14 | 15 |
|---|---|---|---|---|
| Properties | Unit | | | |
| Propylene Component 1 | | | | |
| Amount | wt.% | 39 | 43 | 43 |
| Comonomer content | wt.% | 0 | 0 | 0 |
| Comonomer type | | - | - | - |
| MFR | g/10 min | 31 | - | - |
| Propylene Component 2 | | | | |
| Amount | wt.% | 39 | 43 | 43 |
| Comonomer content | wt.% | 7.8 | 4.0 | 4.0 |
| Comonomer type | | $C_2$ | $C_2$ | $C_2$ |
| Impact Modifier 1 | | | | |
| Amount | wt.% | 22 | 7 | 7 |
| Comonomer type | | $C_3$ | $C_3$ | $C_3$ |
| $IV/XS_{AM}$ | dl/g | 2.5 | 1.1 | 1.1 |
| Impact Modifier 2 | | | | |
| Amount | wt.% | - | 7 | 7 |
| Comonomer type | | - | $C_3$ | $C_3$ |
| $IV/XS_{AM}$ | dl/g | | 1.5 | 1.5 |
| Final | | | | |
| Millad M3988 | ppm | 2000 | 2000 | |
| MFR | g/10 min | 12 | 30 | 27 |
| XS | wt.% | 30.5 | 16.3 | 16.3 |
| $IV/XS_{AM}$ | dl/g | 2.5 | 1.5 | 1.5 |
| $T_m$ | °C | 165/158 | 165 | 165 |
| $T_c$ | °C | 117 | 131 | 130 |
| Charpy, 23°C | kJ/m² | 42.7 | 5.2 | 7.2 |
| Charpy, -20°C | kJ/m² | 5.2 | 1.9 | 1.8 |
| IFW, -20°C | J | 32 | 13 | 24 |
| Tensile Modulus | MPa | 500 | 1150 | 940 |

Preparation of polymer compositions

Polymer compositions comprising the polymers set out in Table 7 below were prepared by firstly dry-blending, pellet with pellet, in a blender and subsequent melt blending in a twin screw extruder. The polymers were then cryogenically ground with liquid $N_2$ assistance to form a powder that is 500-600 microns in average particle size.

The resulting compositions were rotomoulded to form boxes as described in Example 1. The properties of the resulting boxes (as determined on specimens milled from moulded boxes) are also summarised in the table below.

Table 7

| | | C14 | C15 | C16 | C17 | C18 |
|---|---|---|---|---|---|---|
| Polymer 1 | % wt | 20 | 45 | 3 | 10 | 10 |
| Polymer 13 | % wt | 80 | 45 | | | |
| Polymer 14 | % wt | | | 90 | 80 | |

(continued)

| | | C14 | C15 | C16 | C17 | C18 |
|---|---|---|---|---|---|---|
| Polymer 15 | % wt | | | | | 85 |
| Exact 5361 | % wt | | 10 | 7 | 10 | 5 |
| $T_m$ | °C | 163 | 165 | 164 | 164 | 164 |
| $T_c$ | °C | 127.5 | 129.5 | 131 | 131.1 | 130.2 |
| Charpy, 23 | $kJ/m^2$ | 7.9 | 7.7 | 15.5 | 15.9 | 11.6 |
| Charpy, -20 | $kJ/m^2$ | 2.1 | 2 | 6.7 | 6.3 | 2.1 |
| IFW, 0 | | 6.4 | 10.8 | 11.2 | 17.6 | 13.2 |
| Tensile Modulus | MPa | 1050 | 1180 | 960 | 1060 | 1020 |
| HDT | °C | 89.7 | 99.4 | 101.8 | 100.3 | 96.5 |
| Warpage | mm | 1.97 | 3.97 | 4.9 | 5.33 | 4.55 |

## Claims

**1.** Use of a polymer composition for rotomoulding, wherein said composition comprises:

(i) at least two propylene polymer components,
(ii) a nucleating agent; and
(iii) an impact modifier.

**2.** Use as claimed in claim 1, wherein said propylene polymer components have different tacticity and/or different comonomer content and/or different crystallisation temperatures (Tc) .

**3.** Use as claimed in any preceding claim, wherein said propylene polymer components are multimodal in comonomer distribution.

**4.** Use as claimed in any preceding claim, wherein said propylene polymer components comprise a propylene homopolymer and one or more propylene copolymers.

**5.** Use as claimed in any preceding claim, wherein said composition is nucleated with a non-polymeric or polymeric nucleating agent.

**6.** Use as claimed in claim 5 wherein said nucleating agent is a polymeric nucleating agent comprising vinyl compound units deriving from a vinyl compound of formula (I):

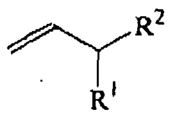

(I)

wherein $R^1$ and $R^2$, together with the carbon atom they arc attached to, form an optionally substituted, fused ring system or saturated, unsaturated or aromatic ring, wherein said ring system or ring comprises 4 to 20 carbon atoms or $R^1$ and $R^2$ independently represent a linear or branched $C_{4-30}$ alkane, a $C_{4-20}$ cycloalkane or a $C_{4-20}$ aromatic ring.

**7.** Use as claimed in any preceding claim, wherein said impact modifier is ethylene propylene rubber (EPR) or LLDPE.

**8.** Use as claimed in any preceding claim, wherein said composition comprises 95 to 60 wt% of said propylene polymer components and 5 to 40 wt% impact modifier.

**9.** Use as claimed in any preceding claim, wherein said composition comprises 20 to 80 wt% of a first propylene

polymer component, 10 to 60 wt% of a second propylene polymer component and 5 to 40 wt% impact modifier.

**10.** A process for the preparation of an article comprising rotomoulding a polymer composition as defined in any one of claims 1 to 9.

**11.** A rotomoulded article comprising a polymer composition as defined in any one of claims 1 to 9.

**12.** An article as claimed in claim 11, wherein said composition has at least two of the following properties (i)-(iv):

i) Warpage (mm): less than 5.5;
ii) Tensile Modulus (MPa): at least 1000;
iii) Charpy (23"C) KJ/$m^3$: at least 10;
iv) Charpy (0°C) KJ/$m^3$: at least 5;

**13.** An article as claimed in any one of claims 11 to 12 which is a container, tub, automotive part, boat, sports and leisure equipment, toy or playground equipment.

**14.** A polymer composition comprising:

(i) at least two propylene polymer components,
(ii) a polymeric nucleating agent comprising vinyl compound units deriving from a vinyl compound of formula (I):

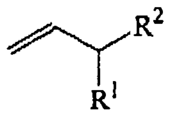

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms or $R^1$ and $R^2$ independently represent a linear or branched $C_{4-30}$ alkane, a $C_{4-20}$ cycloalkane or a $C_{4-20}$ aromatic ring; and
(iii) an impact modifier.

**15.** A polymer composition as claimed in claim 14, wherein said composition is as defined in any one of claims 2-9.

**16.** A polymer composition as claimed in claim 14 or claim 15 which is in the form of powder or pellets having an average size of 100 to 650 μm.

**Patentansprüche**

**1.** Verwendung einer Polymerzusammensetzung für das Rotationsformen, wobei die Zusammensetzung folgendes aufweist:

(i) zumindest zwei Propylenpolymerkomponenten,
(ii) einen Keimbildner und
(iii) einen schlagzähmachenden Zusatzstoff.

**2.** Verwendung nach Anspruch 1, wobei die Propylenpolymerkomponenten eine unterschiedliche Taktizität und/oder einen unterschiedlichen Comonomergehalt und/oder unterschiedliche Kristallisationstemperaturen (Tc) aufweisen.

**3.** Verwendung nach einem der vorstehenden Ansprüche, wobei die Comonomerverteilung der Propylenpolymerkomponenten multimodal ist.

**4.** Verwendung nach einem der vorstehenden Ansprüche, wobei die Propylenpolymerkomponenten ein Propylenhomopolymer und ein oder mehrere Propylencopolymere umfassen.

**5.** Verwendung nach einem der vorstehenden Ansprüche, wobei die Zusammensetzung einer Keimbildung mit einem nicht-polymeren oder polymeren Keimbildner unterzogen wird.

**6.** Verwendung nach Anspruch 5, wobei der Keimbildner ein polymerer Keimbildner ist, der Einheiten in Form einer Vinylverbindung aufweist, die von einer Vinylverbindung der Formel (I) stammen:

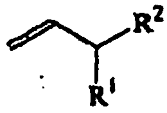

(I)

worin $R^1$ und $R^2$ zusammen mit dem Kohlenstoffatom, an das sie gebunden sind, ein gegebenenfalls substituiertes, kondensiertes Ringsystem oder einen gesättigten, ungesättigten oder aromatischen Ring bilden, wobei das Ringsystem oder der Ring 4 bis 20 Kohlenstoffatome aufweist, oder $R^1$ und $R^2$ unabhängig voneinander für ein lineares oder verzweigtes $C_{4-30}$-Alkan, ein $C_{4-20}$-Cycloalkan oder einen aromatischen $C_{4-20}$-Ring stehen.

**7.** Verwendung nach einem der vorstehenden Ansprüche, wobei der schlagzähmachende Zusatzstoff ein Ethylen-Propylen-Kautschuk (EPR) oder LLDPE ist.

**8.** Verwendung nach einem der vorstehenden Ansprüche, wobei die Zusammensetzung 95 bis 60 Gew.-% der Propylenpolymerkomponenten und 5 bis 40 Gew.-% des schlagzähmachenden Zusatzstoffs umfaßt.

**9.** Verwendung nach einem der vorstehenden Ansprüche, wobei die Zusammensetzung 20 bis 80 Gew.-% einer ersten Propylenpolymerkomponente, 10 bis 60 Gew.-% einer zweiten Propylenpolymerkomponente und 5 bis 40 Gew.-% eines schlagzähmachenden Zusatzstoffs umfaßt.

**10.** Verfahren zum Herstellen eines Gegenstandes, umfassend das Rotationsformen einer Polymerzusammensetzung nach einem der Ansprüche 1 bis 9.

**11.** Rotationsgeformter Gegenstand, umfassend eine Polymerzusammensetzung nach einem der Ansprüche 1 bis 9.

**12.** Gegenstand nach Anspruch 11, wobei die Zusammensetzung mindestens zwei der folgenden Eigenschaften (i) bis (iv) aufweist:

i) Verziehen (mm): weniger als 5,5
ii) Zugmodul (MPa): mindestens 1000
iii) Charpy (23°C) kJ/$m^3$: mindestens 10
iv) Charpy (0°C) kJ/$m^3$: mindestens 5.

**13.** Gegenstand nach einem der Ansprüche 11 bis 12, der ein Behälter, ein Schlauch, ein Kraftfahrzeugteil, eine Boots-, Sport- und Freizeitausrüstung, ein Spielzeug oder eine Spielplatzausrüstung ist.

**14.** Polymerzusammensetzung, die folgendes aufweist:

(i) zumindest zwei Propylenpolymerkomponenten,
(ii) einen polymeren Keimbildner, der Einheiten in Form einer Vinylverbindung aufweist, die von einer Vinylverbindung der Formel (I) stammen:

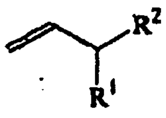

(I)

worin $R^1$ und $R^2$ zusammen mit dem Kohlenstoffatom, an das sie gebunden sind, ein gegebenenfalls substituiertes, kondensiertes Ringsystem oder einen gesättigten, ungesättigten oder aromatischen Ring bilden, wobei das Ringsystem oder der Ring 4 bis 20 Kohlenstoffatome aufweist, oder $R^1$ und $R^2$ unabhängig voneinander für ein lineares oder verzweigtes $C_{4-30}$-Alkan, ein $C_{4-20}$-Cycloalkan oder einen aromatischen $C_{4-20}$-Ring stehen; und

(iii) einen schlagzähmachenden Zusatzstoff.

**15.** Polymerzusammensetzung nach Anspruch 14, wobei die Zusammensetzung wie in einem der Ansprüche 2 bis 9 angegeben ist.

**16.** Polymerzusammensetzung nach Anspruch 14 oder 15, die in Form von Pulver oder Granulat mit einer mittleren Größe von 100 bis 650 µm vorliegt.

## Revendications

**1.** Utilisation d'une composition de polymère pour un rotomoulage, ladite composition comprenant :

(i) au moins deux composants polymères de propylène ;
(ii) un agent de nucléation ; et
(iii) un modificateur d'impact.

**2.** Utilisation selon la revendication 1, dans laquelle lesdits composants polymères de propylène ont une tacticité différente et/ou une teneur en comonomère différente et/ou des températures de cristallisation (Tc) différentes.

**3.** Utilisation selon l'une quelconque des revendications précédentes, dans laquelle lesdits composants polymères de propylène sont multimodaux dans une distribution comonomère.

**4.** Utilisation selon l'une quelconque des revendications précédentes, dans laquelle lesdits composants polymères de propylène comprennent un homopolymère de propylène et un ou plusieurs copolymères de propylène.

**5.** Utilisation selon l'une quelconque des revendications précédentes, dans laquelle ladite composition est nucléée avec un agent de nucléation polymère ou non polymère.

**6.** Utilisation selon la revendication 5, dans laquelle ledit agent de nucléation est un agent de nucléation polymère comprenant des motifs vinyliques dérivés d'un composé vinylique de formule (I) :

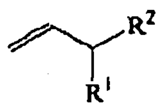

(I)

dans laquelle $R^1$ et $R^2$, ensemble avec l'atome de carbone auquel ils sont attachés, forment un système de cycles condensés ou un cycle saturé, insaturé ou aromatique, facultativement substitué, ledit système de cycles ou cycle comprenant de 4 à 20 atomes de carbone ou $R^1$ et $R^2$ représentent indépendamment un alcane en $C_4$-$C_{30}$ linéaire ou ramifié, un cycloalcane en $C_4$-$C_{20}$ ou un cycle aromatique en $C_4$-$C_{20}$.

**7.** Utilisation selon l'une quelconque des revendications précédentes, dans laquelle ledit modificateur d'impact est un caoutchouc d'éthylène-propylène (EPR) ou un LLDPE.

**8.** Utilisation selon l'une quelconque des revendications précédentes, dans laquelle ladite composition comprend de 95 à 60 % en poids desdits composants polymères de propylène et de 5 à 40 % en poids du modificateur d'impact.

**9.** Utilisation selon l'une quelconque des revendications précédentes, dans laquelle ladite composition comprend de 20 à 80 % en poids d'un premier composant polymère de propylène, de 10 à 60 % en poids d'un second composant polymère de propylène et de 5 à 40 % en pois d'un modificateur d'impact.

**10.** Procédé de préparation d'un article comprenant un rotomoulage d'une composition de polymère telle que définie selon l'une quelconque des revendications 1 à 9.

**11.** Article rotomoulé comprenant une composition de polymère telle que définie selon l'une quelconque des revendications 1 à 9.

**12.** Article selon la revendication 11, dans lequel ladite composition possède au moins deux des propriétés (i) à (iv) suivantes :

i) gauchissement (mm) : inférieur à 5,5 ;
ii) module de traction (MPa) : au moins 1000 ;
iii) Charpy (23 °C) $KJ/m^3$ : au moins 10 ;
iv) Charpy (0 °C) $KJ/m^3$: au moins 5.

**13.** Article selon l'une quelconque des revendications 11 à 12, qui est un contenant, une coupelle, une partie automobile, un bateau, un équipement de sport et de loisir, un jouet ou un équipement d'aire de jeu.

**14.** Composition de polymère comprenant :

(i) au moins deux composants polymères de propylène ;
(ii) un agent de nucléation polymère comprenant des motifs vinyliques dérivés d'un composé vinylique de formule (I) :

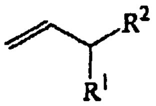

(I)

dans laquelle $R^1$ et $R^2$, ensemble avec l'atome de carbone auquel ils sont attachés, forment un système de cycles condensés ou un cycle saturé, insaturé ou aromatique, facultativement substitué, ledit système de cycle ou cycle comprenant de 4 à 20 atomes de carbone ou $R^1$ et $R^2$ représentent indépendamment un alcane en $C_4$-$C_{30}$ linéaire ou ramifié, un cycloalcane en $C_4$-$C_{20}$ ou un cycle aromatique en $C_4$-$C_{20}$ ; et
(iii) un modificateur d'impact.

**15.** Composition de polymère selon la revendication 14, dans laquelle ladite composition est telle que définie selon l'une quelconque des revendications 2 à 9.

**16.** Composition de polymère selon la revendication 14 ou 15, qui est sous la forme d'une poudre ou de granules ayant une taille moyenne de 100 à 650 μm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03091295 A
- WO 92070602 A
- EP 0887379 A
- WO 9212182 A
- US 5234879 A
- WO 9924501 A
- WO 0035646 A
- WO 0068315 A
- EP 491566 A
- EP 887379 A
- WO 2005002744 A

### Non-patent literature cited in the description

- Die Makromolekulare Chemie. *Die Makromolekulare Chemie,* 1965, vol. 85, 34-45
- *Journal of Applied Polymer Science,* 2002, vol. 85, 734-745
- Encyclopedia of Polymer Science and Engineering. vol. 6, 545-558
- **Glomsaker, T et al.** *Polymer Engineering and Science,* 2005, 945-952
- **Bellehumeur C.T. et al.** *Polymer Engineering and Science,* 1996, vol. 36, 2198-2207